# EUROPEAN PATENT SPECIFICATION

(11) **EP 2 044 282 B1**
(45) Date of publication and mention of the grant of the patent: **01.01.2014**
(21) Application number: 07763873.2
(22) Date of filing: 10.07.2007
(51) Int. Cl.: E05D 11/10, E05C 17/02, E05D 3/06, E05D 11/06, E05F 1/12

(54) **INTEGRATED HINGE ASSEMBLY WITH SPRING BIASED PROP ARM**
INTEGRIERTE GELENKANORDNUNG MIT FEDERVORBELASTETEM STÜTZARM
ENSEMBLE CHARNIÈRE INTÉGRÉ AVEC BRAS PROPULSEUR CONTRAINT PAR RESSORT

(30) Priority: 18.07.2006 US 831470 P; 01.09.2006 US 841533 P; 21.09.2006 US 846092 P; 20.12.2006 US 875815 P; 19.01.2007 US 881135 P
(43) Date of publication of application: 08.04.2009
(73) Proprietor: Warren Industries Ltd., Concord, ON L4K 5E5 (CA)
(72) Inventor: MARSH, Christopher, A., Stouffville, Ontario L4A 7X4 (CA); SABATINI, Gabriele, W., Keswick, Ontario L4P 3Y1 (CA); NYHOLM, Christopher, P., Newmarket, Ontario L3Y 1N8 (CA)
(74) Representative: Charlton, Peter John
(86) International application number: PCT/CA2007/001210
(87) International publication number: WO 2008/009100

(56) References cited:
- DE-B- 1 166 041
- DE-C1- 4 240 790
- GB-A- 313 836
- GB-A- 2 079 361
- US-A- 3 388 417
- US-A- 4 188 684
- US-A- 4 206 944
- US-A- 4 236 272
- US-A- 5 050 270
- US-A1- 2003 172 920
- US-B1- 6 755 268
- US-B2- 6 609 583
- US-B2- 6 892 843

## Description

### RELATED APPLICATIONS

This application is related to the applicant's earlier filed United States provisional application serial No. 60/831,470 filed 18 July 2006; United States provisional application serial No. 60/841,533 filed 01 September 2006; United States provisional application serial No. 60/846,092 filed 21 September 2006; United States provisional application serial No. 60/875,815 filed 20 December 2006; and United States provisional application serial No. 60/881,135 filed 19 January 2007.

### SCOPE OF THE INVENTION

The present invention relates to a hinge assembly suitable for use with a vehicle hood or trunk, airplane door or other closure panel. More particularly, the hinge assembly includes a prop arm which is operable to secure the closure panel in an open position to prevent the unintentional closing of the hinge arms against a closing force selected less than a predetermined threshold force, without the use of conventional gas-charged struts or conventional prop rods.

### BACKGROUND OF THE INVENTION

In automobile manufacture, hinge assemblies are used to pivotally secure closure panels such as tail gates, trunk lids, bonnets and/or hoods to the vehicle frame, or any other type of closure. Conventional car hinges consist of a pair of steel hinge arms which are movably connected to each other by one or more pivots, and which are bolted respectively to one of the closure panel and the car frame. To maintain the car hood in an open position, as for example to permit servicing of the engine, it is known to provide either supplementary gas-charged struts or a prop rod in conjunction with the hood hinges.

The use of hinge mechanisms in conjunction with gas-charged struts advantageously enables the hood to be opened or closed by only one hand of the user. As the hood is opened, gas pressure within the strut acts as a counterbalance to the weight of the hood, and helps to open and hold open the hood/closure panel by supporting the weight of the hood through the force generated by gas pressures within the struts. To close the hood, the user merely applies an added minimum downward pressure on the hood which is sufficient to overcome the resistive force of the struts. Gas struts suffer disadvantages, however, in that over time as a result of wear and seal failures, the struts tend to lose their effectiveness and may require replacement. In addition, as a practical matter, the increased manufacturing costs of gas struts has resulted in their limited use to date. In particular, gas struts are used almost solely with more expensive luxury automobiles, sport utility vehicles and/or vehicles designed with ergonomic difficulties for the end user to open or close the closure panel.

Conventional hood hinge assemblies used with less expensive vehicles are most often provided in conjunction with an elongated prop rod which is hingely mounted along the front of the vehicle under the hood. These hinge systems suffer the disadvantage in that they require two handed operation. In particular, in use, it is necessary to hold open the hood with one hand, and thereafter release, raise and position the prop rod with the other hand, typically orienting the end of the prop rod within a slot or opening formed in a forward underside portion of the hood. When closing the hood, two hands must again be employed, with one hand used to partially raise the hood a certain amount to allow the upper end of the prop rod to be disengaged from the hood slot, and the other to simultaneously lower and reposition the prop rod in a storage operation.

In an effort to attempt to overcome some of the disadvantages of prior art devices, United States Patent No. 6,892,843 B2 to Schillaci et al describes a prop assembly for use in securing a vehicle hood in an open orientation, without the use of a conventional prop rod. In Schillaci, the hinge itself is provided with a rigid prop member which is pivotally connected at an upper end to the hood hinge arm. The lower end of the prop rod is slidably received within a guide slot which extends in an inclined orientation along the car body away from the hinge pivot, and which includes at a proximal most downwardly extending detent. The lower end of the prop rod drops into the detent as the hood is fully opened, to thereby brace the hinge arm in the open orientation.

Schillaci suffers a disadvantage in that to release the hinge and close the hood, it is necessary for an individual to stand to the side of the car adjacent to the hinge, and manually raise both the hood and the end of the prop rod from the detent by means of a release lever. Schillaci therefore continues to require a two-handed operation of the hinge assembly in closing operation. In addition, because the prop rod is released from its position with the user standing beside the vehicle, Schillaci suffers further disadvantages in that it is difficult for shorter and/or physically weaker users to raise the hood when standing to the vehicle side, as in such a position almost the entire weight of the hood is forward from the user. In addition, with Schillaci once the prop rod is released, it may be necessary for the user to reposition him or herself in front of the car to thereafter secure the hood closed in a fully latched configuration.

US-3 388 417 discloses the features of the preamble of claim 1.

### SUMMARY OF THE INVENTION

To at least partially overcome some of the disadvantages associated with prior art devices, the present invention seeks to provide a hinge assembly suitable for use in the opening and closing of not only vehicle hoods, trunks, or deck lids, hatchbacks, tail and tailgates, but also baggage compartment doors, airplane doors, furniture lids or other such closure panel (hereinafter generically referred to as closure panels). Most preferably, the hinge assembly is operable by a user using only one hand, and without the need for either gas-charged struts or conventional prop rods to secure the raised closure panel in place in an open position against closure or downward forces which are less than a selected predetermined threshold force.

Another object of the invention is to provide a hinge assembly which is adapted to secure a vehicle closure panel in an open position over an opening, and which may be quickly and easily locked in place and/or released through one-handed operation.

Another object of the invention is to provide a hinge assembly for a vehicle which includes a prop arm which is provided with a releasable toggle, locking tab member or pawl operable to secure the vehicle hood and/or trunk in an open position against accidental closure, and which may be released by applying a simple downward force greater than predetermined threshold force, to thereby allow closing in final securement of the hood/trunk with a user standing in front or behind the vehicle.

A further object of the invention is to provide a hinge assembly in which the prop arm includes a spring biased guide pin, movable pawl or tab which is slidable to assist in the securement of a prop arm in an engaging position, where the prop rod prevents against accidental hinge closure. The pin, pawl or tab is movable relative to a guide track or slot from an operational section which allows for manual opening and closing of the closure panel in a conventional manner, without the spring significantly affecting hinge operation, into an engaged section, whereby the spring supplies at least a partial force on the prop arm to urge the hinge towards an open orientation.

Another object of the invention is to provide one or more locking hinge mechanisms for use in securing a vehicle bonnet, hood, trunk or deck lid, hatchback, lift back, lift or other closure panel in a locked open orientation, and which in operation provides an upward counterbalancing force, to at least partially offset the dead weight of the closure panel in a manner similar to that of a conventional gas strut.

A further object of the invention is to provide a pair of automobile hinge assemblies for coupling a vehicle hood to the vehicle frame. In operation, the hinge assemblies provide a counterbalancing force greater than the downward force applied by the vehicle hood weight once the hood has been manually raised to a pre-selected angle, to effect further opening of the hood either with minimal further manual lifting force, or more preferably without requiring any further manual lifting force by the user.

Another object of the invention is to provide a hinge assembly for use in connecting a closure panel to a frame, and which includes a pair of pivotally movable hinge arms, and a spring biased prop arm assembly for securing the hinge arms in an open orientation, and wherein the hinge spring is tunable to permit adjustment of the spring force applied to the prop arm.

Still another object of the invention is to provide a hinge assembly which is adapted for use in securing a vehicle deck lid or tailgate to a vehicle frame, and which is tunable for use on a variety of different automobiles to provide a counterbalancing force which has a similar feel to gas charged struts.

A further object of the invention is to provide a locking hinge assembly which possesses a simplified construction for use in securing a closure panel in a locked open orientation, and which may be unlocked by the one-handed application of a predetermined minimum threshold downward force, allowing the closure panel to be closed in a simplified downward movement.

The prop/biasing mechanism is used as part of a hinge. Most preferably, the prop mechanism comprises a hinge assembly for use with a pivotally movable closure panel such as a vehicle hood or trunk, airplane or railcar door, or other furniture lid or component. More particularly, one or more hinge assemblies are adapted to pivotally secure the closure panel to a frame, allowing it to be opened or closed. In use, the hinge assembly is operable to provide a counterbalancing force to lock or hold the closure panel in an open configuration relative against a predetermined threshold closure force without the need of separate support components, such as gas-charged struts or prop rods. Most preferably, the hinge assemblies are selected such that the total counterbalancing force applied by the hinge assemblies exceeds the closure force applied by the weight of the closure panel.

Each hinge assembly is provided with upper and lower hinge brackets, plates or arms (hereinafter generally referred to as hinge arms), which respectively are either integrated into or positioned for coupling directly or indirectly to the closure panel and the adjacent frame. The upper and lower hinge arms are pivotally connected towards their rearward ends for movement relative to each other either by one or more hinge pivots or pins, or for compound pivotal movement about a hinge pivot axis by way of one or more linkage arms pivotally connected to each other at points along the hinge arms.

A generally elongated slot, track or other guidance member (hereinafter collectively and generally referred to as a guide slot) is formed either as a separate member connected to the closure panel or frame, or more preferably is formed on or in the second other hinge arm, with the hinge assembly formed as a pre-manufactured integral unit.

The hinge assembly further includes a prop arm which may be pivotally coupled towards its first end to either the closure panel, the vehicle or furniture frame. More preferably, however, the first end of the prop arm is pivotally secured to a forward portion of a first one of the hinge arms at a point spaced a distance forwardly from one or more of the hinge pivot axis. A guide pin, boss, tab member, prong or pawl (hereinafter collectively generally referred to as a sliding member) is secured toward the second other end of the prop arm. The sliding member engages the guide slot so as to be reciprocally movable therealong as the hinge arms are moved between a fully closed and fully open positions. As will be described, the relative positioning of the sliding member along the guide slot is used to achieve either free movement or locking the hinge assembly in an open position under normal load forces.

The applicant has appreciated that by introducing minor changes to the orientation and curvature of the guide slot and/or the position of pivotal coupling of the prop arm, adjustments may be made to the hinge assembly to permit its tuning without changing or altering spring tension. This enables the use of the hinge asembly to provide a suitable counterbalancing force on a variety of different vehicle models and/or makes.

In a simplified design, the guide slot includes a free operational section where the hinge assembly operates so as to allow the closure panel to be manually opened and closed in a conventional manner, and an engaged section where the hinge assembly moves to provide a positive counterbalancing force on the closure panel, as for example, to assist in preventing movement of the closure panel from open orientation under its own weight.

The operational section is generally elongated and extends forwardly from a rearwardmost bight spaced towards the hinge pivot axis to merge at its forwardmost end with the engaged section. The operational section may be straight, angled and/or curved. Most preferably, the operational section is formed as a parallel sided guide slot and is oriented to allow reciprocal movement of the sliding member therealong. In a preferred construction, the engaged section of the guide slot extends in a generally arcuate or otherwise partially transverse direction to the operating section. Optionally, the engaged portion may also include upper and/or lower detent portions which physically allow the sliding member to move therein to assist in allowing the closure panel to move to a more fully open position, allowing greater access to the vehicle.

The hinge assembly also includes a resilient biasing member which is used to selectively assist in biasing the sliding member forwardly relative to the guide slot. The biasing member is configured to either disengage from or largely passively engage the sliding member as it moves along the operational section of the guide slot, with the hinge assembly operating as a largely conventional hinge as the sliding member locates therein. Most preferably, in the operational section, the sliding member does not place increased stresses on the biasing member, as for example so not to otherwise overtension a biasing spring or the like. The applicant has appreciated that by limiting the biasing force on the sliding member in the operational section, the closure panel is not placed under significant stress and thereby, for example, allowing the vehicle hood, lift gate or the like to be manufactured less robustly and more inexpensively.

As the sliding member moves into the engaged section of the slot, the biasing member actively engages the sliding member to provide a gradually increasing positive biasing force thereon, urging the sliding member forwardly. It is to be appreciated that the biasing force between the member or spring and the slidable second end of the prop arm results in a forward force thereon. Preferably, the forward force increases to a point which is selected to act as a counterbalance weight of the closure panel and assist in moving the closure panel to and from the open configuration.

It is furthermore to be appreciated that comparatively smaller spring constructions may be used with differential coil spacing and/or thicknesses to provide variable counterbalancing effects, as for example, the hinge assembly is opened past and/or between predetermined threshold amounts.

In a simplified construction, the hinge assembly is used as a vehicle hood hinge. The guide slot is formed in the lower hinge arm so as to extend forwardly from a rear portion spaced towards the pivot axis, to a forwardmost end portion, with the prop arm being pivotally connected towards a forward end of the upper hinge arm. It is to be appreciated, however, that the hinge assembly could equally be provided in the reverse orientation, with the prop arm pivotally fixed to the lower hinge arm or even the vehicle frame, and the guide slot provided along the length of the upper hinge arm or formed in the hood. As the hood is raised, and the upper hinge arm is pivoted relative to the lower arm about the hinge pivot and pivot axis, the relative movement of the hinge arms results in the second end of the prop arm and the sliding member being slid forwardly along the operational section of the guide slot.

In a preferred embodiment, the engaged section of the guide slot extends forwardly along a generally arcuate curving path which extends radially about a path axis. A spring biased toggle arm is pivotally secured to the hinge assembly. Although not essential, most preferably the toggle arm is provided with a generally non-linearly or curving engagement surface which is configured for engaging contact with the sliding member as it reciprocally moves along the slot. The toggle member is resiliently movable between an initial biased position, where the engagement surface of the toggle arm is moved adjacent to a side of the operational section of the guide slot so as not to substantially interfere with the sliding movement of the guide member thereon, to an engagement position, wherein the engagement surface is positioned in an orientation at least partially transverse to the direction of elongation of the slot. As the sliding member moves from the operational section of the slot into the engaged section, the rotational movement of the toggle member and contact between the engagement surface and sliding member applies an increasing forward force on the sliding member, reaching a predetermined force to urge the sliding member to move forwardly along the guide slot. This forward movement of the guide member results in the prop arm forcing the hinge arms apart, moving the closure panel towards the open position.

The applicant has appreciated that by adjusting the curvature or angle of the guide slot path and/or the shape of the contact surface of the toggle member or length of the pivot arm may also be used to tune the hinge for use in different applications and/or with different vehicle hoods, lift gates or the like. As such, the present hinge construction provides greater versatility enabling the same hinge parts to be used on a variety of different vehicle types or models with minor adjustment to one or more hinge components such as the spring, guide slot, prop arm and/or toggle arm.

Optionally, the engaged section of the guide slot may include an upper extending detent at its forwardmost end. As the hinge arms move to the fully opened position, the guide member is urged into alignment with the detent, so as to be movable therein to allows the hood to be opened to a greater than normal angle to facilitate access.

In another possible construction, a keeper recess, catch arm, locking hook or other catch member may be used to engage the guide member as it moves to the forward end of the slot, to assist in locking the hinge arms in an open configuration.

To close the vehicle hood, a manual downward force is applied on the hood which is sufficient to move the sliding member downwardly out of alignment with the detent, if any, and rearwardly along the slot, and which exceeds the upward counterbalancing force applied thereagainst the toggle arm. The downward movement of the upper hinge arm results in the sliding member returning rearwardly along the engaged section of the guide slot against the bias of the toggle and spring. Movement of the sliding member along the slot most preferably results in the toggle arm being repositioned to reassume an orientation with its engagement surface parallel to a section of the slot. As the sliding member returns towards the operational section of the slot, most preferably the toggle member provides a gradually decreasing forward force on the sliding member, most preferably reaching a neutral or zero forward force thereon as the sliding member returns into the operational section of the slot. Once so positioned, the sliding member is again passively engaged, so as to freely move along the operational section of the slot without being subjected to significant forward forces. The applicant has appreciated that while not essential, here the effect of the spring on the guide pin is minimized eliminating the need of overtensioning the spring and lengthening spring life. In addition, the present construction advantageously permits the use of comparatively smaller springs as contrasted with conventional spring triggered hood release mechanisms, enabling the entire hinge assembly to be formed with an overall more compact design. Optionally, the sliding member may be provided with a live bearing to minimize any frictional wear, resulting from the contact forces applied by the toggle arm thereon as it moves long the guide slot.

In an alternate possible construction, the engaged section of the guide slot includes a blind end portion which includes upper and lower detents, such that the blind end is elongated in a direction generally transverse to the direction of elongation of the operational section. Here the sliding member may be formed as a locking pawl having an oval or generally elliptical shape, and a width and length selected to enable it to be slidably retained in or along the guide slot. The locking pawl is rotatably coupled towards one of its ends to the second end portion of the prop arm so as to extend forwardly therefrom when the pawl is positioned adjacent to the rearwardmost bight of the guide slot. Preferably, the pawl is provided as a generally elongated member which has an overall length selected to enable its positioning fully within the blind end portion of the slot. Although not essential, the upper detent extends vertically upward relative to the operational section of the guide slot, with the lower detent extending downwardly therebelow. The relative sizing of the pawl and blind end of the slot are selected to allow the substantially reorientation of the pawl therein to a locking position whereby the pawl is moved substantially angularly to the direction of elongation of the operational section.

Because the prop arm is rotatably mounted at its first end to a forwardmost end of the upper hinge arm, its other second end and the locking pawl are slidably movable along the guide slot as the closure panel is raised. In particular, as the hinge arms move open, the locking pawl slides forwardly along the operational section of the guide slot from the rearwardmost bight and into the blind end. As the locking cam moves forwardly, it moves from the operational section into the blind end where engagement between the sides of the detents and the locking pawl, effects the repositioning of the pawl in the locking orientation. Although not essential, most preferably, in the locking orientation the pawl is repositioned with its longitudinal length moved at an angle of 90° ± 10° relative to its positioning when in the operational section of the guide slot.

To close the hood or closure panel, the user simply pulls downwardly on the panel with a predetermined minimum threshold force necessary to overcome the spring force and reposition the locking pawl in substantial alignment with the operational section of the slot. Preferably, as the hinge arms are pulled close, the engagement between surfaces of the guide slot return the locking pawl to its original operating configuration, aligned with the longitudinal axis of the operating section. This repositioning allows its return sliding movement along the slot towards the rearwardmost bight, and the folding of the hinge arms to the closed position.

It is to be appreciated, however, that other means of resetting the locking pawl are also possible, including without limitation, flanges, detents, or other physical constructions.

Accordingly, one aspect the present invention provides a hinge arm assembly comprising a first pivot member and a second pivot member, each of the first and second pivot members extending from a respective proximal portion to a distal portion, the first and second pivot members being coupled for pivotal movement relative to each other about a hinge pivot spaced towards their respective proximal portions,
a generally elongated guide slot is associated with said second pivot member, the guide slot including an operational section and an engaged section, and extending forwardly from a proximalmost end spaced towards the proximal portion of the second pivot member, to a distalmost end spaced towards the second member distal portion,
a rigid prop arm extending from a first arm end to a second arm end, the first arm end being pivotally coupled to the first pivot member for movement relative thereto about an arm pivot spaced from the hinge pivot towards the distal portion of the first pivot member, the second arm end being disposed for movement generally along the guide slot as the first pivot member is moved about the hinge pivot relative to the second pivot member,
a biasing assembly for engaging the prop arm, the biasing assembly resiliently biasing the second arm end towards the distalmost end of the guide slot as the second arm end moves along the at least part of the engaged section to restrict return movement of the second arm end from the engaged section into the operational section absent a predetermined threshold force,
characterized in that the biasing assembly comprises a torsion spring and said biasing assembly further includes a movable engagement member which is engaged by said spring, the engagement member being resiliently movable against the bias of the spring and including a contact surface for contacting at least part of the prop arm, the contact surface being movable between a first position spaced towards the distalmost end of the guide slot and a second position moved rearwardly therefrom towards the proximalmost end,
whereby the contact surface of engagement member is engageable with the prop arm when the second arm end locates in the engagement section to bias the second end towards the distalmost end.

### BRIEF DESCRIPTION OF THE DRAWINGS

Reference may now be had to the following detailed description taken together with the accompanying drawings in which:
Figure 1 illustrates a perspective view of an automobile incorporating a pair of integrated hinge assemblies in accordance with a preferred embodiment of the invention;
Figure 2 illustrates schematically a hinge assembly used in the automobile of Figure 1 illustrating the range of relative motion of the hinge arms between fully opened and fully closed positions;
Figure 3 illustrates a perspective view of the hinge assembly shown in Figure 2 with the hinge arms positioned in an initial fully closed orientation;
Figure 4 illustrates a partial exploded view of the toggle assembly and a prop arm used in the hinge assembly of Figure 3 in locking the hinge arms in a fully open configuration;
Figure 5 illustrates a schematic first side view of the hinge assembly of Figure 3 with the hinge arms positioned in the initial fully closed orientation;
Figure 6 illustrates a schematic side view of the hinge assembly shown in Figure 5 with the hinge arms moved in an initial partially opened position;
Figure 7 illustrates a schematic side view of the hinge assembly shown in Figure 5 with the hinge arms moved past a threshold open position wherein the toggle assembly provides a counterbalancing opening force thereon;
Figure 8 illustrates a schematic side view of the hinge assembly of Figure 5 with the hinge arms positioned in a fully opened configuration;
Figure 9 illustrates a schematic perspective view of a first side of a hinge assembly in accordance with a further embodiment which does not form part of the invention showing the hinge arms in a fully closed position;
Figure 10 illustrates schematically the hinge assembly of Figure 9 showing the movement of the hinge arms and locking pawl towards a fully opened locked position; and
Figure 11 illustrates schematically a perspective view of a first side of a hinge assembly in accordance with another embodiment which does not form part of the invention, showing the hinge arms moved to a fully opened configuration.

### DETAILED DESCRIPTION OF THE PREFERRED EMBODIMENTS

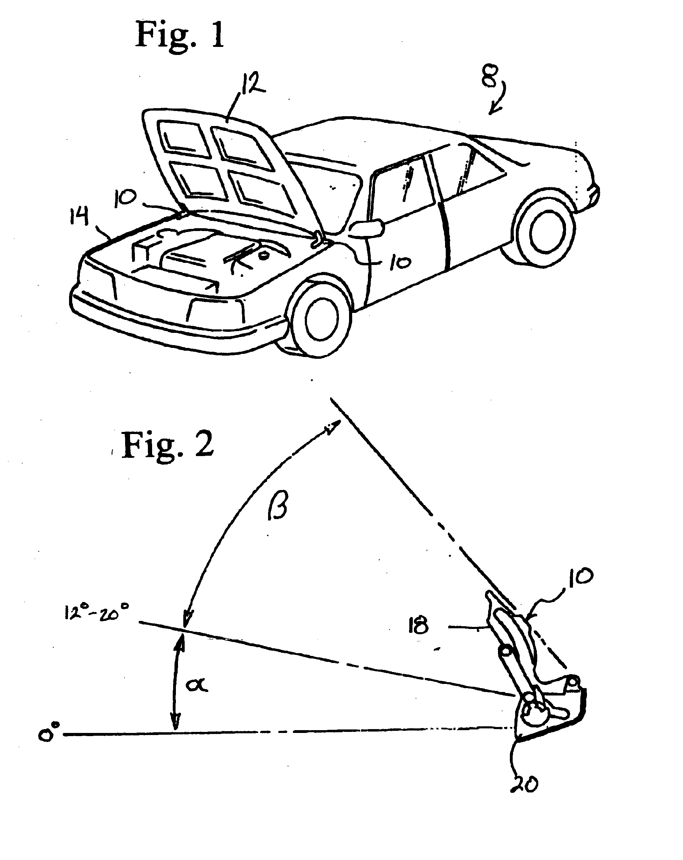

Reference is first made to Figure 1 which illustrates a vehicle 8 employing a pair of integrated hinge assemblies 10 used to pivotally secure a vehicle hood 12 at each of its sides to a car frame 14. The hinge assemblies 10 are configured to enable a user, using one hand, to both raise and secure the hood 12 in the fully opened position shown in Figure 1 relative to the car frame 14, while enabling the hood 12 to be closed and secured from the front of the vehicle 8 by applying a predetermined minimum downward force thereon.

More particularly, as will be described, as shown best in Figure 2, the hinge assemblies 10 are provided such that once the hood 12 (Figure 1) is manually partially opened to a threshold angle α, the hinge assemblies 10 thereafter provide a combined counterbalancing upward force which is equal to and preferably greater than the downward force applied by the weight of the hood 12, to automatically raise or assist in raising the hood 12 to the fully opened position of angle β. As a result, once the hood 12 is raised to critical angle, and preferably a critical angle α selected at between about 10 to 40°, and preferably about 12 and 20°, the hinge assemblies 10 alone are operable to self raise the hood 12 the remaining distance (angle β) without further manual effort, or with manual effort depending on manufacturer requirements.

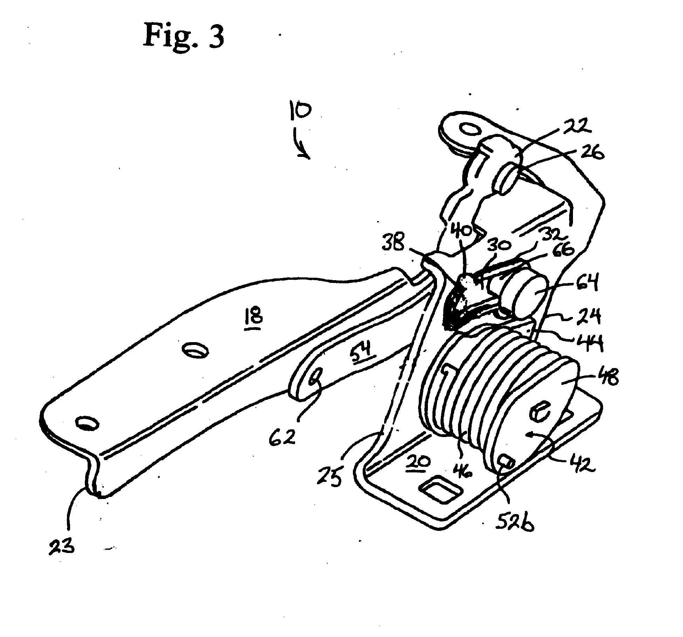

Figures 3 to 8 illustrate the left-hand hinge assembly 10 used to hingely couple the hood 12 to the car frame 14, it being appreciated that the right-hand hinge assembly is formed having the mirror construction, and operable in the identical manner.

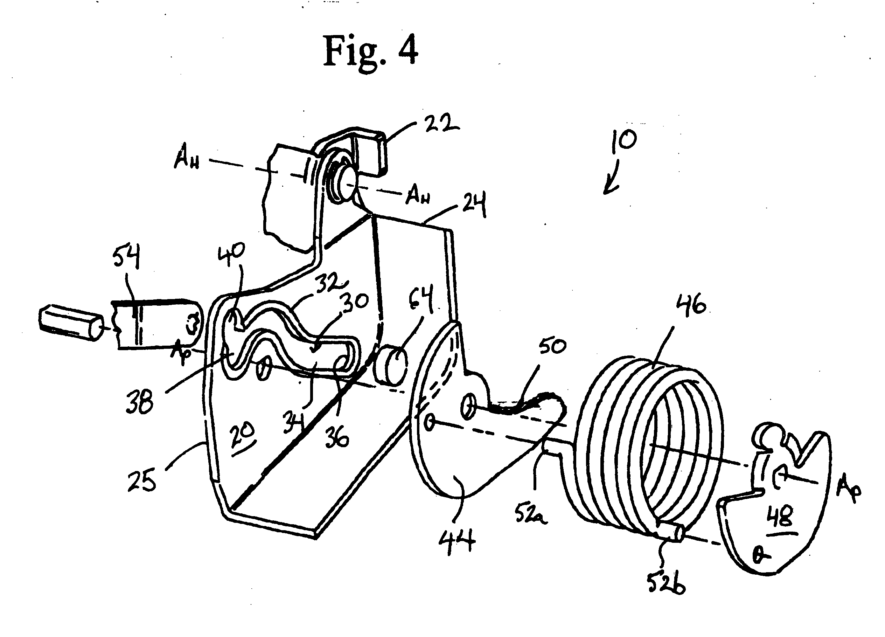

The hinge assembly 10 includes an upper hinge bracket or arm 18 which is adapted for securement to the hood 12 and a lower hinge bracket or arm 20 which is provided for mounting directly to the car frame 14. The upper and lower hinge arms 18,20 are preferably fabricated from steel, aluminum or other suitable metals or alloys, and extend respectively from rearwardmost ends 22,24 to forwardmost ends 23,25. The hinge arms 18,20 are pivotally coupled directly to each other towards their respective rearwardmost ends 22,24 by way of a hinge pivot 26 so as to movably support the hood 12 and be relatively movable relative to each other about a hinge axis A_{H}-A_{H} (Figure 4).

As shown best in the exploded view of Figure 4, a guide slot 30 is formed through the lower hinge arm 20. Although not essential, the guide slot 30 is most preferably characterized by generally parallel sidewalls. The guide slot 30 includes a laterally extending rolled edge 32 which, as will be described, is provided to minimize component wear and enhance the overall hinge assembly life. The guide slot 30 includes a generally linear operational section 34 and a generally arcuate engaged section 38. The operational section 34 extends forwardly and angularly upwardly from a rearwardmost end or bight 36 to merge at its forwardmost end with the initially upwardly and forward curving arcuate section 38. Most preferably the arcute engaged section 38 includes a portion which extends radially about a path axis A_{P} (Figure 4) to a forwardmost upwardly projecting detent 40 at the forwardmost end of the slot 30. Although not required, the detent 40 advantageously permits the hood 12 to be moved to a more fully open position during vehicle assembly and manufacture.

Figure 3 shows the hinge assembly 10 as including a rigid steel prop arm 54. The prop arm 54 is pivotally secured at its first end portion towards the forwardmost end 23 of the upper hinge arm 18 by means of a prop arm pivot 62. A guide bearing 64 is rotatably secured to the second other end of the prop arm 54. The guide bearing 64 is sized so as to be rotatably received within the guide slot 30 for movement therealong. As shown best in Figure 3, the guide bearing 64 is provided with a live bearing 66 which extends laterally through the guide slot 30. As will be described, the live bearing 66 is provided such that in assembly, it is contacted by the rolled edge 32 and/or an engagement surface 50 of a toggle arm 44 to minimize component wear as the hinge arms 18,20 are opened and closed.

Figures 3 and 4 show best the lower hinge arm 20 as further having a toggle assembly 42 mounted thereto. The toggle assembly 42 includes a toggle arm 44, coil torsion spring 46, and cap plate 48. The toggle arm 44 is provided with a projecting finger portion which includes non-linearly extending curving engagement surface 50. The arm 44 is coupled to the hinge arm 20 for pivotal movement generally about the path axis A_{P}-A_{P} such that the engagement surface 50 contacts the guide bearing 64 while being movable in a path of movement at least generally aligned with the engaged section 38 of the slot 30. Although not essential, the curvature of the engagement surface 50 is selected so as to orient generally normal to the engaged section 38 of the slot 30, as the arm 44 moves therealong.

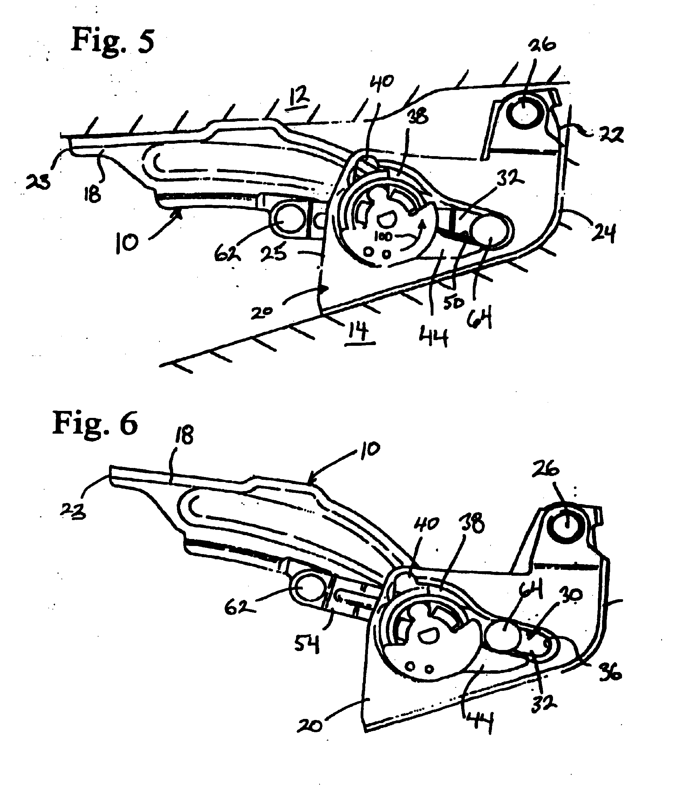

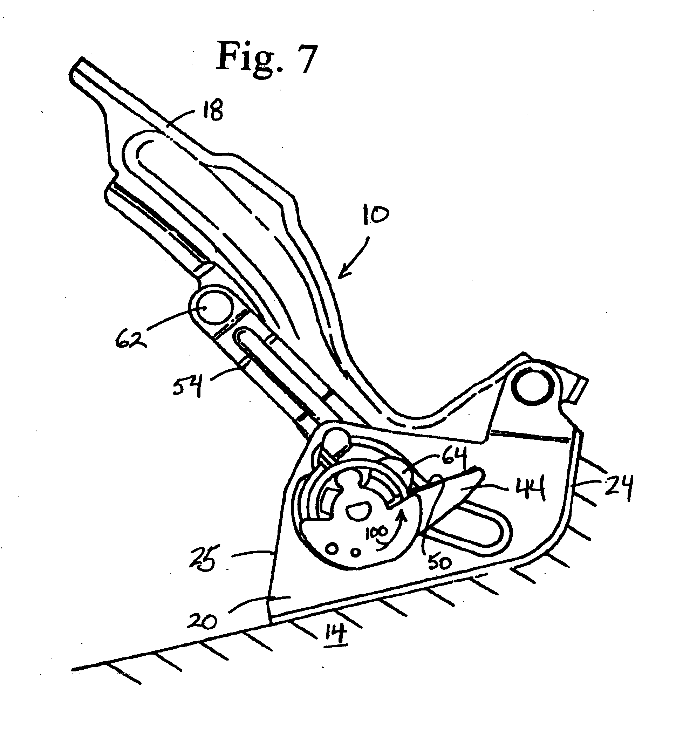

Torsion coil spring 46 is provided with end portions 52a,52b which engage respectively the toggle arm 44, and the cap plate 48 to provide a resilient biasing spring force on the toggle arm 44. In particular, the spring 46 resiliently biases the toggle arm 44 in the direction of arrow 100 (Figure 5) to resiliently urge the engagement surface 50 forwardly towards the actively engaging position and forwardmost bight 40 of the slot 30. Most preferably, the arm 44 is reciprocally movable with the engagement surface 50 in engaging contact with the guide bearing 64 between a passively engaging position (shown in Figure 5) wherein the engagement surface 50 is moved to an orientation generally parallel to and adjacent to the operational section 34 of the slot 30, and an actively engaging position (shown in Figure 7) wherein the engagement surface 50 is oriented at least transversely to the direction of elongation of the engaged section 38 so as to provide a force on the guide bearing 64 forwardly along the slot 30.

Although not essential, most preferably the cap plate 48 is selectively positionable relative to the hinge arm 20. As such, by altering the position of the cap plate 48, it is possible to increase or decrease the tension applied by the spring 46 on the toggle arm 44. As such, by varying the tensioning of the spring force, the hinge assembly 10 may be adjusted to selectively vary the counterbalancing force applied to the hood 12. As such, the hinge assembly 10 is suitable for use with vehicle hoods 12 of different sizes or weights, to provide differing counter balancing forces.

In operation, the toggle assembly 42 selectively provides an upward opening force on the upper hinge arm 18, as the guide bearing 64 is moved from the operational section 34 and into the arcuate engaged section 38 of the slot 30. Figures 5 to 8 show best the hinge arms 18,20 as the forwardmost ends 23,25 are moved relative to each other about the hinge axis A_{H}-A_{H} as the hinge assembly 10 is opened and closed. It is to be appreciated that as the hinge arms 18,20 are opened and closed, the pivotal coupling of the prop arm 54 to the upper hinge arm 18 result in the guide bearing 64 reciprocally moving along the guide slot 30 to extend or collapse the prop arm 54.

Figure 5 shows the hinge assembly 10, initially when the hood 12 is fully closed, and the hinge arms 18,20 are oriented with their forwardmost ends 23,25 substantially in juxtaposed alignment at angle 0 (Figure 2). In this position, the prop arm 54 is generally co-aligned with the hinge arm 18 and the guide bearing 64 of the prop arm 54 is moved rearwardly along the guide slot 30, locating immediately adjacent to the rearward bight 36.

As the hood 12 is initially raised, the upward pivoting movement of the hinge arm 18 relative to hinge arm 20 results in the forward sliding of the guide bearing 64 along the operational section 34 of the guide slot 30. While the guide bearing 64 moves along the operational section 34, the engagement surface 50 of the toggle arm 42 is maintained in a parallel orientation to the direction of elongation of the operational section 34 by its engagement with the bearing 64. In this orientation, the toggle assembly 42 passively engages the guide bearing 64, applying a neutral or zero forward force thereon in a direction which is lateral to the slot direction, and which otherwise does not provide a significant resistive or positive force on the initial opening of the hood 12. As a result, while the guide bearing 64 locates within the operational section 34, and until the hood 12 is raised to threshold angle α, the hood 12 is lifted and lowered in a conventional manner, with the user providing the necessary manual upward lifting force thereon.

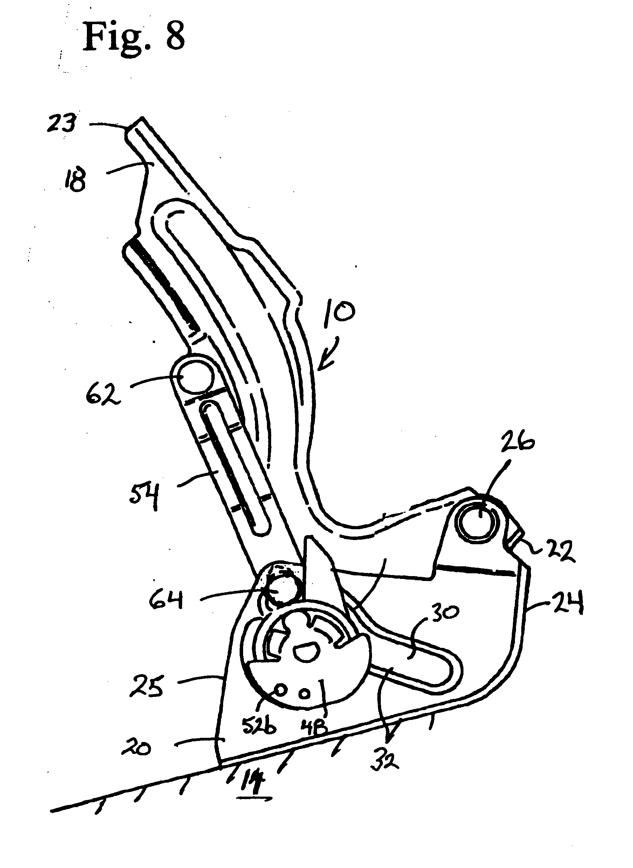

The continued upward lifting of the hood 12 effects movement of the guide bearing 64 into the arcuate engaged section 38, as the hood 12 is raised to the threshold angle α. As shown best in Figures 7 and 8, as the guide bearing 64 moves into and along the arcuate section 38, the resilient force of the spring 46 urges the toggle arm 44 in the counter clockwise direction of arrow 100 about the path axis A_{P}. As a result, the engagement surface 50 is moved relative to and rearwardly of the guide bearing 64 so as to apply a gradually increasing forward force thereon, reaching a predetermined minimum force when the toggle arm 42 fully engages the bearing 64 such that the rear surface of the guide bearing 64 is directly forward of and engaged by the toggle arm 42. In this orientation, the toggle ann 42 provides a forward force on the bearing 64 which is generally aligned with the orientation of the guide slot, to drive the guide bearing 64 forwardly therealong. The forward force on the guide bearing 64 acts to cause the prop arm 54 to further force the hinge arm 18 upwardly, until the bearing 64 reaches the forward end of the slot 30 and the hinge arms 18,20 and at the fully opened angle β. As the guide bearing 64 moves to the forwardmost end of the slot 30, the guide bearing 64 is positioned in alignment with the detent 40.

Most preferably, the spring 46 is provided with a spring tension which is selected such that when the guide bearings 64 are fully engaged by the toggle arm 42, the cumulative force of engaging contact between the toggle arm 44 and guide bearing 64 of the hinge arms 10 is generally equal to or greater than the rearward force applied by the downward weight of the hood 12 on the guide bearing 64 in the reverse direction. As a result, the springs 46 of the hinge assembly 10 allow the hood 12 to be manually raised with only minimum effort, or more preferably self raise the hood 12 open in movement once it has been manually raised to the threshold position α to the fully opened position shown in Figure 1.

To close the vehicle hood 12 and return the hinge assemblies 10 to the initial position of Figure 5, the user (not shown) applies a predetermined minimum downward force on the hood 12. The downward force is selected sufficient to urge the guide bearing 64 rearwardly against the force of the spring 46 out of alignment with the detent 40, and in the reverse direction of arrow 100 against the forward upward force of the toggle arm 44. As the downward force is applied, the engagement between the guide bearing 64 and the engagement surface 50, rotates the toggle assembly 42 clockwise in the reverse direction against the bias of the torsion spring 46 to reposition the toggle arm 44 in an orientation aligned with the longitudinal extent of the operation section 34 as shown in Figure 6. It is to be appreciated that in closing, the spring 46 similarly provides a counterbalancing force against the weight of the vehicle hood 12 with the toggle arm 44 providing a decreasing forward force on the guide bearing 64 in the reverse manner, to prevent it from being lowered too quickly. Once the hood 12 is lowered to the threshold angle α and whereby the toggle arm 44 again passively contacts the guide bearing 64, the hood 12 may be closed via gravity in a conventional manner.

It is to be appreciated that by forming the operational section 34 as an angularly extending linear section allows the hood 12 to be fully closed without over-tensioning of the torsion spring 46. It is to be appreciated that in an alternate construction, the operational section of the guide slot 30 could be formed with a curving or other arcuate configuration, or omitted in its entirety, without departing from the spirit and scope of the invention.

Similarly, although Figures 5 to 8 illustrate the guide slot 30 as extending angularly and then curving upwardly, the invention is not so limited.

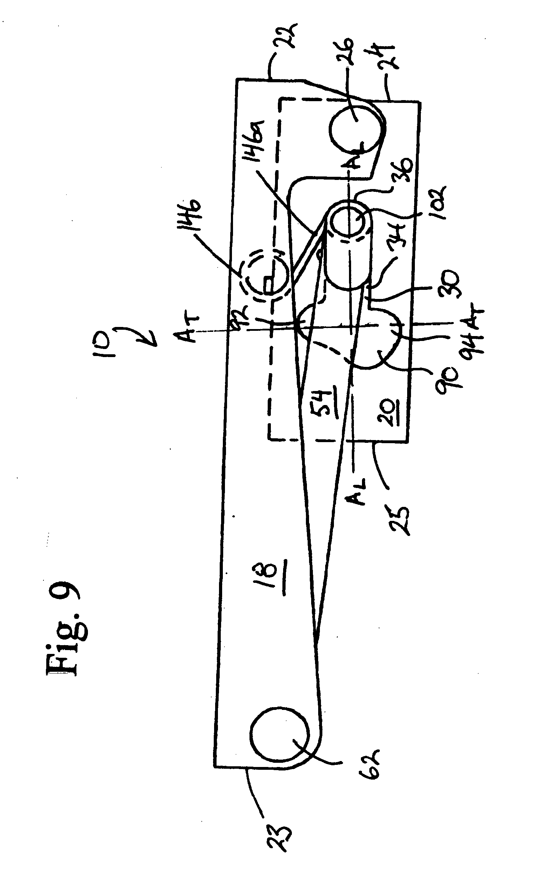

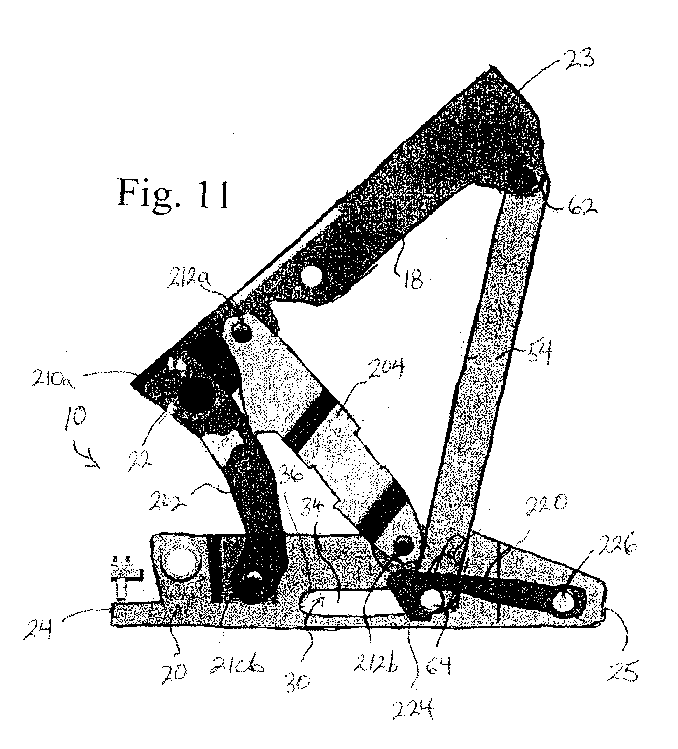

Reference may be made to Figures 9 and 11 which illustrate alternate hinge assemblies 10 which does not form part to the present invention, wherein like reference numerals are used to identify like components.

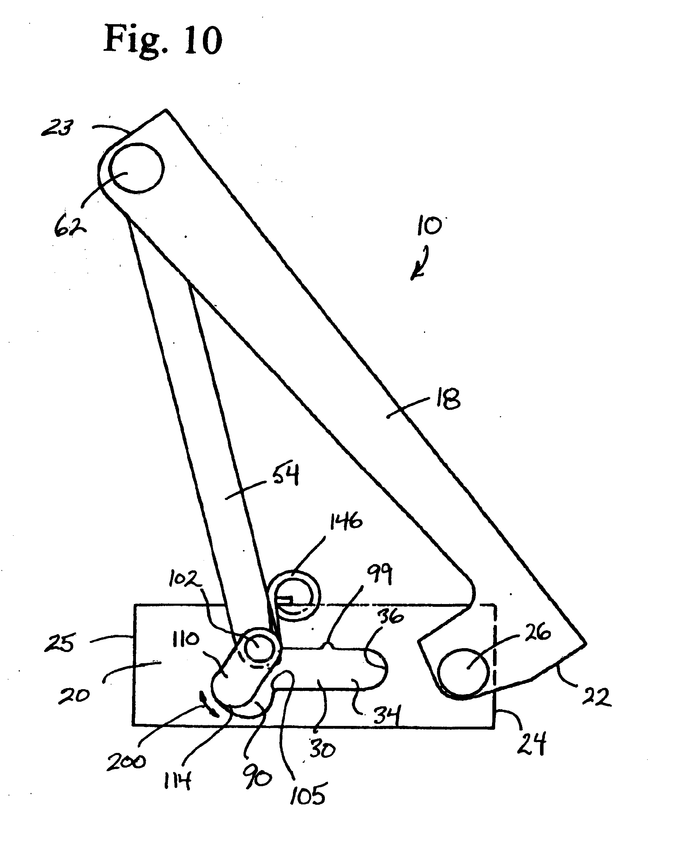

In Figures 9 and 10, the guide slot 30 includes a generally horizontally extending operational section 34. The operational section 34 extends as a linear slot forwardly from rearwardmost end or bight 36 to merge with a forwardmost blind end section 90. In Figure 9, operational section 34 of the slot 30 extends along a longitudinal axis A_{L}-A_{L} which is substantially parallel to the longitudinal direction of elongation of the hinge arm 20. As shown best in Figure 10, a groove 99 is preferably formed in the upper sidewall between the rearwardmost bight 36 and blind end 90.

The blind end 90 is provided with upper and lower detent portions 92,94 so as to be generally elongated in the direction of an axis A_{T}-A_{T} which extends generally transverse to the longitudinal axis A_{L}-A_{L} of the operational section 34. Although not essential, preferably the upper and lower detents 92,94 project away from the axis A_{L}-A_{L} a distance past the respective upper and lower side surfaces and are defined laterally by respective front and rear shoulder surfaces. The lower detent 94 projects downwardly relative to the operational section 34 so as to preferably define a fulcrum point 105 as an angular abutment at the intersect between operational section 34 and lower detent.

Figure 9 shows best the rigid steel prop arm 54 as being secured at its first end portion towards a forwardmost end 23 of the hinge arm 18 by means of prop arm pivot 62. A locking cam 110 is pivotally secured to the second other end of the prop arm 54 by means of a cam pivot 102 provided adjacent to its second other end. As shown in Figure 10, the locking cam 110 is preferably provided with a generally parallel sided elliptical shape, and is elongated along a cam axis. The cam 110 has a lateral thickness selected to enable it to be slidably retained in the guide slot 30. Optionally, the locking cam 110 may be provided with one or more enlarged retaining flange surfaces or sides used to slidably retain the cam 110 within the guide slot 30, so as to prevent its lateral withdrawal therefrom. Most preferably, the locking cam 110 has a lateral width selected marginally less than that of the operational section 34 of the guide slot 30, and a length selected marginally less than the transverse length of the blind end 90. The blind end 90 has a lateral width in the direction of axis A_{L}-A_{L}, a height and width selected to permit the repositioning of a locking cam 110 therein in the selective locking and unlocking of the hood 12 in the raised position.

A coil torsion spring 146 is mounted by way of a support bracket (not shown) to the lower hinge arm 20 as an integral unit. As will be described, the spring 146 includes an end member 146a which is provided to selectively engage and bias the locking cam 110 forwardly in the slot 28, to assist in movement of the locking cam 110 into the blind end 34 of the guide slot 28 as the hood 12 is raised. The spring 146 advantageously acts in conjunction with the cam 110 to lock the hinge assembly 10 in the open position against a downward closing force selected less than a predetermined threshold downward force. The spring 146 is provided as a tunable spring so as to exert differing forward forces on the prop arm 54 and/or locking cam 110, depending on the relative movement of the hinge arms 18,20 to each other. It is to be appreciated, however, that other spring arrangements including extension springs, coil springs, as well as other types of biasing mechanisms and/or springs may also be included on the hinge assembly 10, as part of the vehicle hood 12 or frame 14.

The cam 110 preferably is provided with a rounded forward edge surface 114 which in use of the hinge assembly 10 contacts the sides of the guide slot 30 to facilitate the relative repositioning of the cam 110. In particular, the cam 110 is repositionable between an operating position where the longitudinal cam axis is aligned with the operational section axis A_{L}-A_{L}, and a locking position where the cam axis is aligned with the transverse axis A_{T}-A_{T}. In this regard, the front shoulder of the lower detent 94 most preferably is formed as a caming surface which angles away from the axis A_{L}-A_{L} initially forwardly and downwardly, and thereafter curves rearwardly so as to assist in effecting the rotational movement of the cam 110 about the cam pivot. The rear shoulder of the lower detent 94 most preferably has a curvature which is complementary to that of the lead edge of the cam 110 to facilitate its nesting contact seated thereagainst when in the locking orientation. Although not essential, most preferably the rear shoulder of the lower detent 94 merges with the side surface of the operational section 34 at an acute angle so as to define the fulcrum point 105 which when contacted by the cam 110, effects its repositioning with its longitudinal axis returned into re-alignment with the slot axis A_{L}-A_{L}.

As shown best in Figure 9, the front shoulder of the upper detent 92 is most preferably located to enable the rear edge of cam 110 to assume an orientation seated thereagainst, when the cam axis is aligned with the blind end axis A_{T}-A_{T}, and most preferably oriented normal to the operational section axis A_{L}-A_{L}.

When the hood is initially closed, the upper and lower hinge arms 18,20 are positioned in an approximately parallel juxtaposed orientation shown in Figure 9. In this initial position, the parallel alignment of the hinge arms 18,20 results in the cam pivot 102 and locking cam 110 being slid relative to the guide slot 30. Here the pivot 102 assumes an orientation immediately adjacent to the rearward bight 36, with the cam 110 projecting forwardly therefrom in an operating position, with the cam axis aligned with axis A_{L}-A_{L}, so as to be slidable therealong. Most preferably the rearward movement of the locking cam 110 results in the end of spring 146a being rotated upwardly by its contact with the side of the cam 110, so as to be moved through engaging contact therewith into the groove 99. It is to be appreciated that the relocation of the spring end 146a into the groove 99 results in the substantially unhindered and unbiased movement of the cam 110 and cam pivot 102 therepast, allowing the hood 12 to be opened or closed under its own weight.

As the hood 12 is moved to the fully open position, initially movement of the hinge arms 18,20 about the hinge pivot 26 results in the locking cam 110 being slid forwardly along the operational section 34 of the slot 30. Once the cam pivot 102 moves forwardly past the groove 99, the biasing end 146a of the spring 146 rotates downwardly against the rear of the cam 110. As a result of the compression forces of the spring 146, the engaging contact between the spring 146 and cam 110 urges the cam 110 forwardly. The engagement of the end of the spring 146 on the locking cam 100, in turn produces a counterbalancing upward force on the hinge arm 18, to assist in the opening of the hinge assembly 10 and the raising of the hood 12.

As the hood 12 continues to be raised, the forward edge 114 of the locking cam 110 is brought into bearing contact against the angular caming shoulder surface of the detent 94. This contact, combined with the forward force applied by the end of the spring 146, results in the cam 110 rotating about the pivot 102 in the direction of arrow 200 (Figure 10) with its forwardmost edge 114 moving downwardly into the lower detent 94. Simultaneously, the rearward end of the cam 110 and the cam pivot 102 moving upwardly into the upper detent 92 in the manner shown in Figure 10. As the hood 12 assumes the fully open orientation, the cam 110 assumes a locking orientation with its longitudinal cam axis substantially aligned with the transverse axis A_{T}-A_{T}, restricting its return movement of the pivot 102 into the operational section 34 of the slot 30. Furthermore, the biasing end of the spring 146 applies a forward force on the reoriented locking cam 110, to assist in maintaining it in the locked position below threshold return forces. Most preferably, the spring 146 is configured to maintain an offset forward force on the repositioned cam 110 under a downward load force selected less than a desired threshold minimum force, and which typically would be greater than that required to counterbalance the weight of the hood 12.

To close the hood 12, the user merely applies a downward force on the hood 12 which is sufficient to overcome the predetermined minimum threshold force applied by the spring 146 and which is necessary to effect the repositioning of the cam 110 in alignment with the axis A_{L}-A_{L}. The downward force on the hood 12 results in the movement of the hinge arms 18,20 about the hinge pivot 26. The relative movement of the hinge arms 18,20 in turn results in the prop arm 54 urging the locking cam 110 rearwardly against the fulcrum point 105. This contact in turn effects a reorientation of the cam 110 to resume a position aligned with the axis A_{L}-A_{L}, allowing the cam 110 and cam pivot 102 to slide rearwardly into and along the operational section 34 of the guide slot 30. The continued rearward movement of the cam 110 along the guide slot 30 initially moves against the bias of the spring 146, providing a counterbalancing force to the weight of the hood 12 up to the point where the spring is slid to the side of the cam 110 into the groove 99. The inventors have appreciated that by repositioning the spring end 146a into the groove 99 when the hood 12 is in the normally closed position, the spring 146 is typically maintained in a less distorted state, as contrasted, for example, when the spring 146 is used to continuously provide a biasing force on the cam member 110, prolonging spring life.

The construction of the present invention advantageously enables use of multiple hinge assemblies 10 in vehicle or other closure panel applications.

Although the detailed description describes the hinge assembly 10 as being used in the securement of a vehicle hood 12, it is to be appreciated that the hinge assembly 10 is equally suitable for other applications. By way of non-limiting example, the hinge assembly could also be used in the hinged coupling of lift gates, hatchbacks, vehicle doors, trunks, or other closure access panels used in trucks, buses, automobiles, aircraft, railcars, furniture and the like, without departing from the spirit and scope of the invention.

While the preferred embodiment describes the presence of a guide slot 30 formed in the lower hinge arm 20 as presenting a simplified construction, it is to be appreciated that the guide slot 30 could be provided in the upper hinge arm 18 or as a separate part or component altogether. Similarly, if desired, the prop arm 54 could be pivotally secured either directly to the hood 12 or closure panel, or to other closure panel elements apart from the upper hinge arm 18 without departing from the spirit and scope of the invention, as defined by the claims.

While the Figures have described the integrated hinge assembly 10 as including upper and lower hinge arms 18,20 for simplification, it is to be appreciated that the hinge could be equally provided in inverted arrangement to that shown.

Although the preferred embodiment of the invention describes a hinge assembly 10 as having two pivot arms 18,20, the present invention could equally be used with other hinge assemblies having multiple hinge bar constructions, including those having pivotally connected linkage arms. Reference may be had to Figure 11 where the hinge assembly 10 is provided which is of a four-bar hinge construction. In Figure 11, a pair of connecting arms 202,204 are used to secure the hinge arms 18,20 for movement pivotally relative to each other. The connecting arm 202 is pivotally secured respectively to the rearwardmost ends 22,24 of the upper and lower hinge arms 18,20 by pivots 210a,210b, respectively. The connecting arm 204 is secured to the upper and lower hinge arms 18,20 by way of pivots 212a,212b, respectively at points forwardly from the pivots 210a,210b.

In Figure 11, a reciprocally movable catch arm 220 is furthermore provided to assist in locking the hinge assembly 10 with the arms 18,20 moved in an open orientation. The catch arm 220 includes a hooked end 224 which is pivotal about an arm pivot 226 between a lowered position, where the end 224 is moved into engaging contact with guide bearing 64 so as to prevent its return movement along the operational section 34 of the slot towards rearward bight 36, and a position raised thereabove and which is selected to permit substantially free sliding movement of the guide bearing 64 along the slot 30. A spring (now shown) is preferably provided to resiliently bias the guide bearing 64 forwardly along the slot 30 into engaging contact with the hooked arm 220. A crank member, locking pin or biasing spring may be provided to selectively retain the hooked end 224 in the release position to permit the collapse of the hinge arms 18,24 in the closing of a hood.

Although the detailed description describes the hinge assembly 10 as including a pair of hinge arms 18,20 which are provided for mechanical coupling to the vehicle hood 12 and frame 14, the invention is not so limited. It is to be appreciated that the hinge assembly 10 could equally be provided with either the hood 12 or frame 14 functioning as the equivalent to a hinge arm, with the guide slot 30 or a corresponding guide groove or member provided therein.

Although Figure 1 illustrates the vehicle 8 as employing a pair of integrated hinge assemblies 10, it is to be appreciated that the invention is not so limited. In an alternate construction, the vehicle 8 could be provided with only a single hinge assembly 10, with the second other standard hinge being provided to pivotally secure the hood 12 for movement relative to the frame 14.

## Claims

1. A hinge arm assembly (10) comprising a first pivot member (18) and a second pivot member (20), each of the first and second pivot members extending from a respective proximal portion to a distal portion, the first and second pivot members being coupled for pivotal movement relative to each other about a hinge pivot (26) spaced towards their respective proximal portions,
a generally elongated guide slot (30) being associated with said second pivot member, the guide slot (30) including an operational section (34) and an engaged section (38), and extending forwardly from a proximalmost end (36) spaced towards the proximal portion of the second pivot member, to a distalmost end (38) spaced towards the second pivot member (20) distal portion,
a rigid prop arm (54) extending from a first arm end to a second arm end, the first arm end being pivotally coupled to the first pivot member (18) for movement relative thereto about an arm pivot (62) spaced from the hinge pivot (26) towards the distal portion of the first pivot member (18), the second arm end being disposed for movement generally along the guide slot (30) as the first pivot member (18) is moved about the hinge pivot (26) relative to the second pivot member (20),
a biasing assembly (42) for engaging the prop arm (54), the biasing assembly resiliently biasing the second arm end towards the distalmost end of the guide slot (30) as the second arm end moves along the at least part of the engaged section (38) to restrict return movement of the second arm end from the engaged section (38) into the operational section (34) absent a predetermined threshold force,
**characterized in that** the biasing assembly (42) comprises a torsion spring (46) and said biasing assembly further includes a movable engagement member (44) which is engaged by said spring (46), the engagement member (44) being resiliently movable against the bias of the spring (46) and including a contact surface (50) for contacting at least part of the prop arm (54), the contact surface (50) being movable between a first position spaced towards the distalmost end (38) of the guide slot (30) and a second position moved rearwardly therefrom towards the proximalmost end (36),
whereby the contact surface (50) of engagement member (44) is engageable with the prop arm (54) when the second arm end locates in the engaged section (38) to bias the second end towards the distalmost end of the guide slot (30).

2. The assembly as claimed in claim 1 **characterized in that** as the second arm end is moved to the operational section (34), the biasing assembly permits substantially unhindered sliding movement of the second arm end relative the guide slot (30).

3. The assembly as claimed in claim 1 **characterized in that** the prop arm (54) includes a bearing member (64) spaced towards the second arm end,
the engaged section of the guide slot (30) including a generally arcuate portion extending radially about a point axis, with the operational section of the guide slot (30) extending in a generally linear orientation
the engagement member (44) and elongated contact surface being rotatable about the point axis, whereby in the first position, the contact surface (50) being oriented generally parallel to the linear extent of operational section so as to passively engage the bearing member (64) when located therein,
and in the second position, the contact surface (50) extending generally transverse to the arcuate portion to actively engage the bearing member so as to resiliently bias it towards the distalmost end.

4. The assembly as claimed in any one of claims 1 to 3 **characterized in that** the prop arm (54) comprises an elongate metal arm.

5. The assembly as claimed in anyone of claims 1 to 4 **characterized in that** the guide slot (30) comprises a guide slot formed through said second pivot member.

6. The assembly as claimed in claim 5 **characterized in that** the guide slot (30) further includes a forwardmost detent (40) spaced generally adjacent the distalmost end.

7. The assembly as claimed in anyone of claims 1 to 5 **characterized in that** the first pivot member (18) comprises a generally elongated first hinge arm, the second pivot member (20) comprising a second hinge arm, a pivot pin (26) mechanically coupling the proximal portion of the first pivot arm to the proximal portion of the second hinge arm.

8. The assembly as claimed in claim 1 or claim 3 **characterized in that** said hinge arm assembly (10) is a vehicle hinge assembly for pivotally securing a closure panel selected from the group consisting of a vehicle hood, a vehicle trunk, deck lid, and a vehicle lift back, to a vehicle frame, said first pivot arm being configured for securement to the closure panel, with the second pivot arm being configured for attachment to the frame.

9. The assembly as claimed in claim 8 **characterized in that** when the closure panel is moved to the closed position, the distal portions of the first and second pivot members (18, 20) being moved towards a juxtaposed position, and in the open position the distal portions being moved apart relative therefrom,
the guide slot (30) comprising a guide slot formed in said second hinge arm,
the movable engagement member (44) mounted for engaging contact with a sliding member (64) mounted to said prop arm (54) and being slidable relative to the slot (30), the engagement member (44) being resiliently movable between a release position when said sliding member (64) locates in the operational section, so as not to substantially interfere with rearward movement of the sliding member along said operational section (34) of said slot, and an engaged position when said sliding member (64) locates in the engaged section (38), wherein said engagement member (44) engages said prop arm to provide a predetermined minimum forward force thereon, to assist in forward movement of the sliding member (64) along the slot (30).

10. The hinge assembly as claimed in anyone of claims 1 to 9 **characterized in that** the first and second pivot members (18,20) comprise respectively first and second pivot arms, the first and second pivot arms being movable relative to each other between fully opened and closed positions, wherein in the fully open position, said second arm end is moved towards the distalmost end of the guide slot (30) with the distal portions moved a first distance apart, and in the closed position, the second arm end locating towards the proximalmost end of the guide slot (30), and the distal portions being moved closer together a second distance apart selected less than said first distance.

11. The assembly as claimed in anyone of claims 1 to 7 **characterized in that** said hinge arm assembly (10) is a vehicle hinge assembly for pivotally securing a vehicle hood to a vehicle frame, said first hinge arm being configured for securement to the vehicle hood, with the second pivot member being configured for attachment to the frame.

12. The hinge assembly as claimed in anyone of claims 8, 9 or 10 **characterized in that** the weight of the hood on the first hinge arm provides a rearward biasing force on the second arm end, the spring (46) being selected such that said engagement member (44) provides a forward biasing force in the second arm member greater than the rearward biasing force when the second arm end is moved to the engaged section.

13. The assembly as claimed in anyone of claims 1, 3, 8 or 9 **characterized in that** the assembly further including a mounting bracket (48) for securing the spring (46) to the second hinge arm (20), the mounting bracket (48) being adapted to permit selective positioning of the spring (46) relative to the second pivot member (20) to effect adjustment in the spring tension on the engagement member (44).

14. The assembly as claimed in anyone of claims 8 or 9 **characterized in that** the forward force applied by the engagement member (44) to the sliding member (64) increases to a predetermined force as said sliding member (64) initially moves forwardly along said engaged section, the predetermined force being selected generally equal to or greater than a rearward force on the sliding member (64) supplied by the weight of the closed panel when said sliding member (64) is in said engaged section (38).

## Patentansprüche

1. Gelenkarmanordnung (10), umfassend ein erstes Schwenkglied (18) und ein zweites Schwenkglied (20), wobei sich sowohl das erste als auch das zweite Schwenkglied von einem jeweiligen proximalen Abschnitt zu einem distalen Abschnitt erstreckt, wobei das erste und das zweite Schwenkglied für eine Schwenkbewegung relativ zueinander um einen Gelenkdrehpunkt (26), der in Richtung ihrer proximalen Abschnitte beabstandet ist, gekoppelt sind,
einen im Allgemeinen länglichen Führungsschlitz (30), der dem zweiten Schwenkglied zugeordnet ist, wobei der Führungsschlitz (30) einen Betätigungsabschnitt (34) und einen Eingriffsabschnitt (38) umfasst und sich von einem proximalsten Ende (36), das in Richtung des proximalen Abschnitts des zweiten Schwenkglieds beabstandet ist, zu einem distalsten Ende (38), das in Richtung des distalen Abschnitts des zweiten Schwenkglieds (20) beabstandet ist, vorwärts erstreckt,
einen starren Stützarm (54), der sich von einem ersten Armende zu einem zweiten Armende erstreckt, wobei das erste Armende mit dem ersten Schwenkglied (18) zur Bewegung relativ dazu um einen Armdrehpunkt (62) schwenkbar gekoppelt ist, welcher von dem Gelenkdrehpunkt (26) in Richtung des distalen Abschnitts des ersten Schwenkglieds (18) beabstandet ist, wobei das zweite Armende zur Bewegung im Allgemeinen entlang dem Führungsschlitz (30) angeordnet ist, wenn das erste Schwenkglied (18) relativ zu dem zweiten Schwenkglied (20) um den Drehpunkt (26) bewegt wird,
eine Vorspannanordnung (42) zum Ineingriffbringen des Stützarms (54), wobei die Vorspannanordnung das zweite Armende in Richtung des distalsten Endes des Führungsschlitzes (30) elastisch vorspannt, während sich das zweite Armende mindestens einen Teil des Eingriffsabschnitts (38) entlang bewegt, um die Rückstellbewegung des zweiten Armendes von dem Eingriffsabschnitt (38) in den Betätigungsabschnitt (34) bei Nichtvorliegen einer vorgegebenen Schwellenkraft einzuschränken,
**dadurch gekennzeichnet, dass** die Vorspannanordnung (42) eine Torsionsfeder (46) umfasst und die Vorspannanordnung ferner ein bewegliches Eingriffsglied (44) umfasst, in welches die Feder (46) eingreift, wobei das Eingriffsglied (44) gegen die Vorspannung der Feder (46) elastisch bewegbar ist und eine Kontaktoberfläche (50) zum Berühren von mindestens einem Teil des Stützarms (54) umfasst, wobei die Kontaktoberfläche (50) bewegbar ist zwischen einer ersten Stellung, die in Richtung des distalsten Endes (38) des Führungsschlitzes (30) beabstandet ist, und einer zweiten Stellung, die von dort in Richtung des proximalsten Endes (36) nach hinten bewegt ist,
wobei die Kontaktoberfläche (50) des Eingriffsglieds (44) mit dem Stützarm (54) in Eingriff gebracht werden kann, wenn das zweite Armende in dem Eingriffsabschnitt (38) angeordnet wird, um das zweite Ende in Richtung des distalsten Endes des Führungsschlitzes (30) vorzuspannen.

2. Anordnung nach Anspruch 1, **dadurch gekennzeichnet, dass**, während das zweite Armende zu dem Betätigungsabschnitt (34) bewegt wird, die Vorspannanordnung eine im Wesentlichen unbehinderte Schiebebewegung des zweiten Armendes relativ zu dem Führungsschlitz (30) ermöglicht.

3. Anordnung nach Anspruch 1, **dadurch gekennzeichnet, dass** der Stützarm (54) ein Lagerglied (64) umfasst, welches in Richtung des zweiten Armendes beabstandet ist,
wobei der Eingriffsabschnitt des Führungsschlitzes (30) einen im Allgemeinen bogenförmigen Abschnitt umfasst, der sich radial um eine Punktachse erstreckt, wobei sich der Betätigungsabschnitt des Führungsschlitzes (30) in einer im allgemeinen geradlinigen Ausrichtung erstreckt,
wobei das Eingriffsglied (44) und die längliche Kontaktoberfläche um die Punktachse drehbar sind, wobei in der ersten Stellung die Kontaktoberfläche (50) im Allgemeinen parallel zu der linearen Erstreckung des Betätigungsabschnitts ausgerichtet ist, um mit dem Lagerglied (64) passiv in Eingriff zu stehen, wenn sie darin angeordnet ist,
wobei sich in der zweiten Stellung die Kontaktoberfläche (50) im Allgemeinen quer zu dem bogenförmigen Abschnitt erstreckt, um mit dem Lagerglied aktiv in Eingriff zu stehen, um dieses in Richtung des distalsten Endes elastisch vorzuspannen.

4. Anordnung nach einem beliebigen der Ansprüche 1 bis 3, **dadurch gekennzeichnet, dass** der Stützarm (54) einen länglichen Metallarm umfasst.

5. Anordnung nach einem beliebigen der Ansprüche 1 bis 4, **dadurch gekennzeichnet, dass** der Führungsschlitz (30) einen Führungsschlitz umfasst, der durch das zweite Schwenkglied ausgebildet ist.

6. Anordnung nach Anspruch 5, **dadurch gekennzeichnet, dass** der Führungsschlitz (30) ferner eine vorderste Raste (40) umfasst, die im Allgemeinen dem distalsten Ende benachbart beabstandet ist.

7. Anordnung nach einem beliebigen der Ansprüche 1 bis 5, **dadurch gekennzeichnet, dass** das erste Schwenkglied (18) einen im Allgemeinen länglichen ersten Gelenkarm umfasst, das zweite Schwenkglied (20) einen zweiten Gelenkarm umfasst, ein Gelenkstift (26) den proximalen Abschnitt des ersten Schwenkarms mechanisch an den proximalen Abschnitt des zweiten Gelenkarms koppelt.

8. Anordnung nach Anspruch 1 oder Anspruch 3, **dadurch gekennzeichnet, dass** die Gelenkarmanordnung (10) eine Fahrzeuggelenkanordnung zum schwenkbaren Befestigen einer Verschlussplatte, ausgewählt aus der Gruppe umfassend eine Fahrzeugmotorhaube, einen Fahrzeugkofferraum, einen Kofferraumdeckel und eine Fahrzeugheckklappe, an einem Fahrzeugrahmen ist, wobei der erste Schwenkarm zur Befestigung an der Verschlussplatte ausgestaltet ist und der zweite Schwenkarm zur Befestigung an dem Rahmen ausgestaltet ist.

9. Anordnung nach Anspruch 8, **dadurch gekennzeichnet, dass**, wenn die Verschlussplatte in die geschlossene Stellung bewegt wird, die distalen Abschnitte des ersten und des zweiten Schwenkgliedes (18, 20) in Richtung einer nebeneinander angeordneten Stellung bewegt werden, und in der offenen Stellung die distalen Abschnitte relativ dazu auseinanderbewegt werden,
wobei der Führungsschlitz (30) einen Führungsschlitz umfasst, der in dem zweiten Gelenkarm ausgebildet ist, wobei das bewegliche Eingriffsglied (44) für Eingriffskontakt mit einem Schiebeglied (64) angebracht ist, welches an dem Stützarm (54) angebracht und in Bezug auf den Schlitz (30) verschiebbar ist, wobei das Eingriffsglied (44) elastisch bewegbar ist zwischen einer Lösestellung, wenn das Schiebeglied (64) in dem Betätigungsabschnitt angeordnet ist, um die Rückwärtsbewegung des Schiebeglieds entlang dem Betätigungsabschnitt (34) des Schlitzes nicht erheblich zu beeinträchtigen, und einer Eingriffsstellung, wenn das Schiebeglied (64) in dem Eingriffsabschnitt (38) angeordnet ist, wobei das Eingriffsglied (44) mit dem Stützarm in Eingriff tritt, um eine vorgegebene minimale Vorwärtskraft darauf vorzusehen, um die Vorwärtsbewegung des Schiebeglieds (64) entlang dem Schlitz (30) zu unterstützen.

10. Gelenkanordnung nach einem beliebigen der Ansprüche 1 bis 9, **dadurch gekennzeichnet, dass** das erste und das zweite Schwenkglied (18, 20) einen ersten bzw. einen zweiten Schwenkarm umfassen, wobei der erste und der zweite Schwenkarm relativ zueinander zwischen einer vollständig geöffneten und einer vollständig geschlossenen Stellung bewegbar sind, wobei in der vollständig geöffneten Stellung das zweite Armende in Richtung des distalsten Endes des Führungsschlitzes (30) bewegt wird, wobei die distalen Abschnitte einen ersten Abstand auseinander bewegt sind, und in der geschlossenen Stellung das zweite Armende in Richtung des proximalsten Endes des Führungsschlitzes (30) angeordnet ist und die distalen Abschnitte getrennt durch einen zweiten Abstand, der kleiner als der erste Abstand gewählt ist, näher zueinander bewegt sind.

11. Anordnung nach einem beliebigen der Ansprüche 1 bis 7, **dadurch gekennzeichnet, dass** die Gelenkarmanordnung (10) eine Fahrzeuggelenkanordnung zum schwenkbaren Befestigen einer Fahrzeugmotorhaube an einem Fahrzeugrahmen ist, wobei der erste Gelenkarm zur Befestigung an der Fahrzeugmotorhaube ausgestaltet ist, wobei das zweite Schwenkglied zur Befestigung an dem Rahmen ausgestaltet ist.

12. Gelenkanordnung nach einem beliebigen der Ansprüche 8, 9 oder 10, **dadurch gekennzeichnet, dass** das Gewicht der Motorhaube an dem ersten Gelenkarm eine Rückwärtsvorspannkraft an dem zweiten Armende vorsieht, wobei die Feder (46) derart gewählt wird, dass das Eingriffsglied (44) eine Vorwärtsvorspannkraft in dem zweiten Armglied vorsieht, die größer als die Rückwärtsvorspannkraft ist, wenn das zweite Armende zu dem Eingriffsabschnitt bewegt wird.

13. Anordnung nach einem beliebigen der Ansprüche 1, 3, 8 oder 9, **dadurch gekennzeichnet, dass** die Anordnung ferner eine Montageklammer (48) zum Befestigen der Feder (46) an dem zweiten Gelenkarm (20) umfasst, wobei die Montageklammer (48) dazu ausgebildet ist, das gezielte Positionieren der Feder (46) relativ zu dem zweiten Schwenkglied (20) zu ermöglichen, um eine Einstellung der Federspannung an dem Eingriffsglied (44) durchzuführen.

14. Anordnung nach einem beliebigen der Ansprüche 8 oder 9, **dadurch gekennzeichnet, dass** die durch das Eingriffsglied (44) auf das Schiebeglied (64) aufgebrachte Vorwärtskraft auf eine vorgegebene Kraft ansteigt, während sich das Schiebeglied (64) anfangs entlang dem Eingriffsabschnitt vorwärts bewegt, wobei die vorgegebene Kraft als im Allgemeinen größer gleich einer auf das Schiebeglied (64) wirkenden Rückwärtskraft gewählt wird, die durch das Gewicht der geschlossenen Platte vorgesehen wird, wenn sich das Schiebeglied (64) in dem Eingriffsabschnitt (38) befindet.

## Revendications

1. Ensemble de bras articulé (10) comprenant un premier élément pivotant (18) et un second élément pivotant (20), chacun des premier et second éléments pivotants s'étendant depuis une partie proximale respective jusqu'à une partie distale, les premier et second éléments pivotants étant couplés de manière à exécuter un mouvement pivotant l'un par rapport à l'autre autour d'un pivot d'articulation (26) espacé en direction de leurs parties proximales respectives,
une fente de guidage allongée de manière générale (30) étant associée audit second élément pivotant (20), la fente de guidage (30) comprenant une section opérationnelle (34) et une section engagée (38) et s'étendant vers l'avant depuis une partie la plus proximale (36) espacée en direction de la partie proximale respective du second élément pivotant (20) jusqu'à une extrémité la plus distale (38) espacée en direction de la partie distale du second élément pivotant (20),
un bras support rigide (54) s'étendant d'une première extrémité du bras à une seconde extrémité du bras, la première extrémité du bras étant couplée de manière à pouvoir pivoter au premier élément pivotant (18) pour permettre un mouvement relatif par rapport à celui-ci autour d'un pivot du bras (62) espacé du pivot d'articulation (26) en direction de la partie distale du premier élément pivotant (18), la seconde extrémité du bras étant disposée de manière à permettre un mouvement d'une manière générale le long de la fente de guidage (30) lorsque le premier élément pivotant (18) bouge autour du pivot d'articulation (26) par rapport au second élément pivotant (20),
un ensemble d'inclinaison (42) s'engageant dans le bras support (54), l'ensemble d'inclinaison inclinant en souplesse la seconde extrémité du bras vers l'extrémité la plus distale de la fente de guidage (30) lorsque la seconde extrémité du bras se déplace le long d'au moins une partie de la section engagée (38) afin de restreindre le mouvement de retour de la seconde extrémité du bras depuis la section engagée (38) dans la section opérationnelle (34) en l'absence d'un seuil de force prédéterminé,
**caractérisé en ce que** l'ensemble d'inclinaison (42) comprend un ressort torsadé (46) et que ledit ensemble d'inclinaison comprend un élément d'engagement mobile (44) dans lequel ledit ressort (46) s'engage, l'élément d'engagement (44) étant mobile en souplesse à l'encontre de l'inclinaison du ressort (46) et comprenant une surface de contact (50) pour contacter au moins une partie du bras support (54), la surface de contact (50) étant mobile entre une première position espacée vers l'extrémité la plus distale (38) de la fente de guidage (30) et une seconde position déplacée sur l'arrière de celle-ci vers l'extrémité la plus proximale (36),
ce qui fait que la surface de contact (50) de l'élément d'engagement (44) peut s'engager dans le bras support (54) lorsque la seconde extrémité du bras se trouve dans la section engagée (38) afin d'incliner la seconde extrémité vers l'extrémité la plus distale de la fente de guidage (30).

2. Ensemble selon la revendication 1, **caractérisé en ce que**, lorsque la seconde extrémité du bras se déplace en section opérationnelle (34), l'ensemble d'inclinaison permet un mouvement coulissant sensiblement sans entraves de la seconde extrémité du bras par rapport à la fente de guidage (30).

3. Ensemble selon la revendication 1, **caractérisé en ce que** le bras support (54) comprend un élément porteur (64) espacé en direction de la seconde extrémité du bras,
la section engagée de la fente de guidage (30) comprenant une partie de manière générale arquée s'étendant radialement autour d'un axe de point, la section opérationnelle de la fente de guidage (30) s'étendant suivant une orientation de manière générale linéaire,
l'élément d'engagement (44) et la surface de contact allongée pouvant tourner autour de l'axe de point, ce qui a pour effet que, dans la première position, la surface de contact (50) est d'une manière générale orientée parallèlement à l'extension linéaire de la section opérationnelle de manière à s'engager passivement dans l'élément porteur (64) quand elle se trouve dedans et que,
dans la seconde position, la surface de contact (50) s'étend de manière générale transversalement par rapport à la partie arquée pour s'engager activement dans l'élément porteur de manière à l'incliner en souplesse vers l'extrémité la plus distale.

4. Ensemble selon l'une quelconque des revendications 1 à 3, **caractérisé en ce que** le bras support (54) comprend un bras métallique allongé.

5. Ensemble selon l'une quelconque des revendications 1 à 4, **caractérisé en ce que** la fente de guidage (30) comprend une fente de guidage pratiquée dans ledit second élément pivotant.

6. Ensemble selon la revendication 5, **caractérisé en ce que** la fente de guidage (30) comporte un cran (40) placé le plus à l'avant possible et d'une manière générale espacé de manière à être adjacent à l'extrémité la plus distale.

7. Ensemble selon l'une quelconque des revendications 1 à 5, **caractérisé en ce que** le premier élément pivotant (18) comprend un premier bras articulé de manière générale allongé, le second élément pivotant (20) comprenant un second bras articulé, une broche pivotante (26) couplant mécaniquement la partie proximale du premier bras pivotant à la partie proximale du second bras articulé.

8. Ensemble selon la revendication 1 ou la revendication 3, **caractérisé en ce que** ledit ensemble de bras articulé (10) est un ensemble d'articulation de véhicule permettant de bloquer en pivotement un panneau de fermeture, sélectionné dans le groupe composé d'un capot de véhicule, d'un coffre de véhicule, d'une capote et d'un hayon de véhicule, sur un châssis de véhicule, ledit premier bras pivotant étant conçu pour être fixé sur le panneau de fermeture, le second bras pivotant étant conçu pour être attaché au châssis.

9. Ensemble selon la revendication 8, **caractérisé en ce que**, lorsque le panneau de fermeture est déplacé en position de fermeture, les parties distales des premier et second éléments pivotants (18, 20) sont déplacées en position juxtaposée et, en position ouverte, les parties distales en sont écartées,
la fente de guidage (30) comprenant une fente de guidage pratiquée dans ledit second bras articulé,
l'élément d'engagement mobile (44) monté de manière à s'engager en contact dans un élément coulissant (64) monté sur ledit bras support (54) et coulissant par rapport à la fente (30), l'élément d'engagement (44) étant mobile en souplesse entre une position de relâchement lorsque ledit élément coulissant (64) se trouve dans la section opérationnelle, de manière à ne pas interférer substantiellement avec le mouvement vers l'arrière de l'élément coulissant le long de ladite section opérationnelle (34) de ladite fente, et une position engagée lorsque ledit élément coulissant (64) se trouve dans la section engagée (38), ledit élément d'engagement (44) s'engageant dans ledit bras support pour exercer une force minimale prédéterminée dirigée vers l'avant dessus afin d'assister le mouvement vers l'avant de l'élément coulissant (64) le long de la fente (30).

10. Ensemble articulé selon l'une quelconque des revendications 1 à 9, **caractérisé en ce que** les premier et second éléments pivotants (18, 20) comprennent respectivement des premier et second bras articulés, les premier et second bras articulés étant mobiles l'un par rapport à l'autre entre des positions entièrement ouverte et fermée, sachant que, dans la position entièrement ouverte, ladite seconde extrémité du bras est déplacée vers l'extrémité la plus distale de la fente de guidage (30), les parties distales étant déplacées espacées d'une première distance et, dans la position fermée, la seconde extrémité du bras se trouvant vers l'extrémité la plus proximale de la fente de guidage (30), et les parties distales étant déplacées plus rapprochées d'une seconde distance choisie inférieure à ladite première distance.

11. Ensemble selon l'une quelconque des revendications 1 à 7, **caractérisé en ce que** ledit ensemble articulé (10) est un ensemble articulé de véhicule servant à bloquer en pivotement un capot de véhicule sur un châssis de véhicule, ledit premier bras articulé étant conçu pour être fixé sur le capot du véhicule, le second élément pivotant étant conçu pour être attaché au châssis.

12. Ensemble selon l'une quelconque des revendications 8, 9 ou 10, **caractérisé en ce que** le poids du capot sur le premier bras articulé exerce une force d'inclinaison vers l'arrière sur la seconde extrémité du bras, le ressort (46) étant sélectionné de manière à ce que ledit élément d'engagement (44) exerce sur la seconde extrémité du bras une force d'inclinaison vers l'avant supérieure à la force d'inclinaison vers l'arrière lorsque la seconde extrémité du bras se déplace vers la section engagée.

13. Ensemble selon l'une quelconque des revendications 1, 3, 8 ou 9, **caractérisé en ce que** l'ensemble comprend en outre une patte de montage (48) pour fixer le ressort (46) sur le second bras articulé (20), la patte de montage (48) étant apte à permettre un positionnement sélectif du ressort (46) par rapport au second élément pivotant (20) pour effectuer un ajustement de la tension du ressort sur l'élément d'engagement (44).

14. Ensemble selon l'une quelconque des revendications 8 ou 9, **caractérisé en ce que** la force dirigée vers l'avant appliquée par l'élément d'engagement (44) sur l'élément coulissant (64) augmente jusqu'à une force prédéterminée lorsque ledit élément coulissant (64) se déplace initialement vers l'avant le long de ladite section engagée, la force prédéterminée étant choisie d'une manière générale supérieure ou égale à une force dirigée vers l'arrière sur l'élément coulissant (64) fournie par le poids du panneau fermé lorsque ledit élément coulissant (64) est dans ladite section engagée (38).
